# EUROPEAN PATENT SPECIFICATION

(11) **EP 4 164 854 B1**
(45) Date of publication and mention of the grant of the patent: **20.08.2025**
(21) Application number: 21731066.3
(22) Date of filing: 01.06.2021
(51) Int. Cl.: B29C 44/10, B29C 44/58, B29C 44/42, B29C 33/10, B29K 75/00, B29L 31/50

(54) **MICROCELLULAR FOAMING PROCESS FOR PRODUCING LOW DENSITY THERMOPLASTIC POLYURETHANE FOAM**
MIKROZELLULÄRES SCHÄUMVERFAHREN ZUR HERSTELLUNG VON THERMOPLASTISCHEM POLYURETHANSCHAUM MIT NIEDRIGE DICHTE
PROCÉDÉ DE MOUSSE MICROCELLULAIRE POUR LA PRODUCTION DE MOUSSE DE POLYURÉTHANE THERMOPLASTIQUE À BASSE DENSITÉ

(30) Priority: 10.06.2020 WO PCT/CN2020/095344
(43) Date of publication of application: 19.04.2023
(73) Proprietor: BASF SE, 67056 Ludwigshafen am Rhein (DE)
(72) Inventor: PANG, Qiang, Shanghai 200137 (CN); CHEN, Jie, Shanghai (CN); CHEN, Dian Jun, Shanghai 200137 (CN)
(74) Representative: BASF IP Association
(86) International application number: PCT/EP2021/064622
(87) International publication number: WO 2021/249819

(56) References cited:
- EP-B1- 1 333 059
- WO-A1-2011/112352
- CN-A- 105 835 299
- CN-A- 109 320 952
- CN-A- 110 499 016
- JP-A- 2006 124 579
- JP-A- H08 216 169
- JP-A- S5 358 571
- US-A1- 2012 032 365
- US-A1- 2019 351 592
- US-A1- 2019 389 100

## Description

### TECHNICAL FIELD

The present invention relates to a process to produce low density thermoplastic polyurethane (TPU) foam via microcellular foaming process, which includes introducing counter pressure gas into a mold to build up a counter pressure and the mold has venting holes distributed all over the mold. The low density TPU foam thus obtained is useful, particularly in sports goods or shoe sole.

### BACKGROUND

Recently, low density foam materials attract increasing interests from industry since they can reduce the material cost. Among them, TPU foam has plus advantage of high rebound due to the elasticity of the material itself, which enables its excellent application in sports goods or shoe sole, et al. Therefore, developing a process to making TPU foam with low density is very critical for such applications.

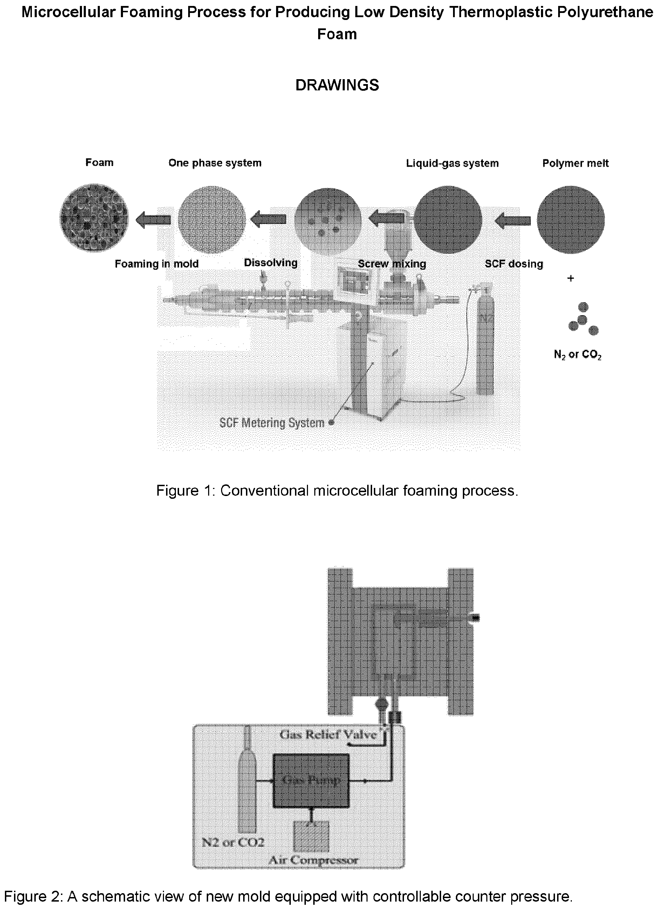

Microcellular foaming process is a commercial process to make thermal plastic foams. By designing proper shape of mold, it can make many shaped foams directly out of the process. In a microcellular foaming process, a supercritical fluid (SCF), such as nitrogen or carbon dioxide, is dosed into a thermoplastic polymer melt in the machine barrel. It creates foaming structure in the article by gas expansion upon depressurization in the cavity of a mold. The detail of this process is shown in Fig 1.

In a traditional microcellular foaming process, it is challenging to make TPU foam with low density. In many instances, the foamed bubbles will collapse as the TPU foam expands in the mold upon depressurization and cells do not grow at the same time in the injection flow, resulting in TPU foamed articles having high density and large voids. Thus, in general, TPU foam made via microcellular foaming process has high density of > 0.45g/cm³, with big cell void having a diameter of >5mm. Owing to the formation of big voids, the homogeneity of the foam obtained is unsatisfactory, the rebound resilience is lower, and the use of such foam is restricted.

US 2019/389100 A1 describes an injection molding device consisting of an upper and lower mold base and mold components. The upper mold base contains an injection port connected to an injection molding machine, while the lower mold base has a mold cavity and gas passages for controlled gas flow. The lower mold, made of porous material, enabling the lower mold to have a plurality of pores, includes shaped air paths that regulate gas pressure within the mold cavity. During molding, gas pre-fills the cavity to maintain pressure, then gradually releases as raw material fills the mold. After forming, gas assists in separating the finished product from the mold by exiting through the porous lower mold.

CN 109320952 describes a process for producing low density TPU bead foam by extrusion foaming using a polytetrafluoroethylene and talc coupling modification. The low-density TPU bead foam is prepared through extrusion foaming based on polytetrafluoroethylene (PTFE) and talcum powder coupled modification, and the method comprises the following materials in a formula: 85-98 wt% of TPU,0.5-10 wt% of PTFE, 0.5-8 wt% of talcum powder, 0-10 wt% of supercritical carbon dioxide and 0-1 wt% of supercritical nitrogen.

### SUMMARY OF THE PRESENT INVENTION

One object of the present invention is to provide a process to produce low density thermoplastic polyurethane foam without the problems listed above. This object is fulfilled by a process to produce low density thermoplastic polyurethane foam via microcellular foaming process, which comprises:
a) dosing a supercritical fluid into the thermoplastic polyurethane melt to form a mixture;
b) injecting the mixture into a mold and foaming the mixture;
c) before or during the injection of the mixture, introducing a counter pressure gas into the mold;
d) releasing the counter pressure gas after the injection; and
e) releasing the thermoplastic polyurethane foam from the mold,

where the mold has venting holes distributed all over the mold,
characterized in that the venting holes in the mold have a diameter in the range of 0.05-1 mm and the density of the venting holes in the mold is 1-8 holes/cm³ on average..

In an embodiment, the supercritical fluid is selected from nitrogen, carbon dioxide or mixture thereof.

In an embodiment, the counter pressure gas is selected from nitrogen, carbon dioxide and air.

In an embodiment, the counter pressure gas is introduced to build up a counter pressure of 5-10 bar inside the mold, preferably 5.5-9.5 bar, more preferably 6.5-8.5 bar.

According to the invention, the mold has venting holes with a diameter of 0.05-1 mm, and in a density of 1-8 holes/cm³, preferably 2-5 holes/cm³, more preferably 2-3 holes/cm³ in average.

In a further embodiment, the supercritical fluid is dosed into the TPU melt in an amount of 0.3-1.5 wt%, preferably 0.5-1.2 wt%, more preferably 0.6-1 wt%, based on the weight of the TPU melt.

In a further embodiment, the mold has three gate opens, i.e., upper gate, lower gate and middle gate. The upper and lower gates have a gate open delay time of 2-4 s delay, and the middle gate has a gate open delay time of 0-0.5 s delay.

In a further embodiment, the thermoplastic polyurethane is prepared by adding 0.1-6 wt% of silicone oil, preferably 0.5-5 wt%, more preferably 1.5-3.5 wt%, based on the weight of the TPU.

The thermoplastic polyurethane foams obtainable or obtained by the process of the present invention have a low density of 0.3 g/cm³ or less, and voids in a diameter of less than 2 mm, preferably less than 1 mm, especially less than 0.5 mm. An article comprising the thermoplastic polyurethane foams obtainable or obtained by the process of the present invention may be footwear, such as shoe sole.

Compared with conventional microcellular foaming process, the inventive process produces foams with lower density and higher homogeneity. The density is less than 0.3 g/cm³ and even as low as 0.2 g/cm³. The voids in the foams are smaller, with a diameter of less than 2 mm, preferably less than 1 mm, and can even be less than 0.5 mm. As result of the high homogeneity, the foams have higher rebound resilience, making them excellent for applications, such as sports goods, shoe parts, automotive parts and leisure goods.

### BRIEF DESCRIPTION OF THE DRAWINGS

Figure 1 is a schematic view of the conventional microcellular foaming process to produce TPU foam.
Figure 2 is a schematic view of new mold equipped with controllable counter pressure.
Figure 3 shows pictures of two test plate samples: (a) conventional microcellular foaming TPU article with normal mold, and (b) inventive microcellular foaming TPU article with new mold equipped with controllable counter pressure and venting holes.
Figure 4 shows pictures of the samples obtained from the inventive examples 1-2 and comparative examples 1-2.

### DETAILED DESCRIPTION OF THE PRESENT INVENTION

Unless defined otherwise, all technical and scientific terms used herein have the meaning commonly understood by a person skilled in the art to which the invention belongs. As used herein, the following terms have the meanings ascribed to them below, unless specified otherwise.

As used herein, the articles "a" and "an" refer to one or to more than one (i.e., to at least one) of the grammatical object of the article. By way of example, "an element" means one element or more than one element.

As used herein, the term "about" is understood to refer to a range of numbers that a person of skill in the art would consider equivalent to the recited value in the context of achieving the same function or result.

As used herein, the term "additives" refers to additives included in a formulated system to enhance physical or chemical properties thereof and to provide a desired result. Such additives include, but are not limited to, dyes, pigments, toughening agents, impact modifiers, rheology modifiers, plasticizing agents, thixotropic agents, natural or synthetic rubbers, filler agents, reinforcing agents, thickening agents, inhibitors, fluorescence or other markers, thermal degradation reducers, thermal resistance conferring agents, surfactants, wetting agents, defoaming agents, dispersants, flow or slip aids, biocides, and stabilizers.

Unless otherwise identified, all percentages (%) are "percent by weight".

The radical definitions or elucidations given above in general terms or within areas of preference apply to the end products and correspondingly to the starting materials and intermediates. These radical definitions can be combined with one another as desired, i.e. including combinations between the general definition and/or the respective ranges of preference and/or the embodiments.

All the embodiments and the preferred embodiments disclosed herein can be combined as desired, which are also regarded as being covered within the scope of the present invention, as defined by the appended claims.

Unless otherwise identified, the temperature refers to room temperature and the pressure refers to ambient pressure.

Unless otherwise identified, the solvent refers to all organic and inorganic solvents known to the persons skilled in the art and does not include any type of monomer molecular.

The present invention is directed to a process to produce low density thermoplastic polyurethane foam via microcellular foaming process, which comprises:
a) dosing a supercritical fluid into the thermoplastic polyurethane melt to form a mixture;
b) injecting the mixture into a mold and foaming the mixture;
c) before or during the injection of the mixture, introducing a counter pressure gas into the mold;
d) releasing the counter pressure gas after the injection; and
e) releasing the thermoplastic polyurethane foam from the mold,
where the mold has venting holes distributed all over the mold, characterized in that the venting holes in the mold have a diameter in the range of 0.05-1 mm and the density of the venting holes in the mold is 1-8 holes/cm³ on average.

### Step a)

In step a), a supercritical fluid is dosed into the thermoplastic polyurethane melt to form a mixture in a container. First, the thermoplastic polyurethane is fed into a container. In an embodiment, the container is a machine barrel, and TPU pellets are fed into a processing space inside the barrel from a polymeric material delivery system, such as a hopper. The barrel may be heated by one or more heating units mounted on the surface of the barrel. The heating units are used to heat the barrel to an elevated temperature prior to mixing, and hold the barrel at that elevated temperature during mixing and injection. In an embodiment, the heating units can heat the barrel to a temperature of 160-320°C, preferably 180-280°C, more preferably 200-240°C. Upon the heating, the TPU pellets melt into liquid, and the TPU melt is delivered by a screw mounted inside the barrel.

TPU may be prepared by mixing di- and/or polyisocyanates, compounds having isocyanate-reactive hydrogen atoms, a catalyst, optionally a free-radical initiator, and optionally further additives into a reaction mixture and curing the mixture. TPU may have a molecular weight Mw of 100000-300000 g/mol, preferably 200000-250000 g/mol, shore hardness A of 50-90A, preferably 60-90A, more preferably 65-85A.

Useful di- or polyisocyanates include any aliphatic, cycloaliphatic or aromatic isocyanates known for preparation of polyurethanes, and also any desired mixtures of said isocyanates. Examples are 2,2'-, 2,4"- and 4,4'-diphenylmethane diisocyanate, the mixtures of monomeric diphenylmethane diisocyanates and higher-nuclear homologs of diphenylmethane diisocyanate (polymeric MDI), 2,4- or 2,6-tolylene diisocyanate (TDI) or mixtures thereof, tetramethylene diisocyanate or its oligomers, hexamethylene diisocyanate (HDI) or its oligomers,. Di- and polyisocyanates (a) are also usable in the form of polyisocyanate prepolymers. These polyisocyanate prepolymers are obtainable by above-described polyisocyanates being reacted in excess, for example at temperatures of 30 to 100°C, preferably at about 80°C, with compounds having two or more isocyanate-reactive groups, to form the prepolymer.

Compounds having two or more isocyanate-reactive groups are known to the person skilled in the art. Useful compounds having two or more isocyanate-reactive groups include, for example, polyetherols or polyesterols. The compounds used as having two or more isocyanate-reactive groups are preferably polyetherols or polyesterols comprising secondary OH groups, for example polypropylene oxide. These polyetherols or polyesterols preferably have a functionality of 2 to 3, more preferably of 2, and a not less than 50%, preferably not less than 75% and especially not less than 85% proportion of secondary OH groups.

Useful catalysts include polyurethane catalysts of the customary type. These hasten the reaction of compounds having isocyanate-reactive hydrogen atoms with di- and polyisocyanates to a substantial extent. Customary catalysts useful for preparing the polyurethanes include, for example, amidines, such as 2,3-dimethyl-3,4,5,6-tetrahydropyrimidine, tertiary amines, such as triethylamine, tributylamine, dimethylbenzylamine. Similarly useful are organometallic compounds, preferably organotin compounds, such as tin(ll) salts of organic carboxylic acids, e.g., tin(II) acetate, tin(ll) octoate, tin(ll) ethylhexoate and tin(ll) laurate.

There is no particular limitation to the thermoplastic polyurethane used. Any thermoplastic polyurethane that is conventionally used in the polyurethane industry with shore hardness of 50-90A, preferable 60-90A, more preferable 65-85A can be selected in the present invention, and can be commercially available as, for example, Elastollan^{®} from BASF. Conventionally, the thermoplastic polyurethane may have a molecular weight Mw of 100000-300000 g/mol, preferably 200000-250000 g/mol.

Suitable production processes for thermoplastic polyurethanes are disclosed, for example, in EP 0922552 A1, DE 10103424A1 or WO 2006/072461 A1. The preparation usually takes place on a belt system or a reaction extruder, but can also be carried out on a laboratory scale, for example by hand casting. Depending on the material properties of the components, these are all mixed directly with each other or individual components are premixed and/or pre-reacted, for example, to prepolymers, and then brought to polyaddition.

In an embodiment, the thermoplastic polyurethane is prepared by adding 0.1-6 wt% of silicone oil, preferably 0.5-5 wt%, more preferably 1.5-3.5 wt%, based on the weight of the TPU. Silicone oil is conventionally used as emulsifier or as nucleator in polyurethane system. Suitable silicone oil that can be used in the present invention includes, but not limited to, methyl silicone oil, ethyl silicone oil, phenyl silicone oil, methyl hydrosilicone oil, methyl phenyl silicone oil, methyl chlorophenyl silicone oil, methyl ethoxy silicone oil, methyl trifluoropropyl silicone oil, methyl vinyl silicone oil, methyl hydroxyl silicone oil, ethyl hydrosilicone oil, hydroxyl hydrosilicone oil, cyanosilicone oil, et al. Silicone oil possesses emulsification and nucleation abilities simultaneously. However, certain silicone oils that have better performance as nucleators are especially suitable for the present invention, and result in better effects in terms of the foam density and cell homogeneity. These silicone oils can be commercially available from, for example, Momentive Performance Materials Inc. as Niax L-6863, L-6860, L-6950, L-6164, et al.

In an embodiment, before the foaming process, TPU pellets are pre-dried in, for example, a vacuum oven under 80-130°C, or 100-120°C for 1-4 hours. After pre-dry, the TPU pellets are dosed into the hopper. Nitrogen gas may be continuously dosed into the hopper to prevent possible water absorption of the TPU pellets. When the foaming process starts, a screw rotates inside the barrel, in a plasticizing speed of 10-50 rpm, preferably of 10-30 rpm, and more preferably 10-20 rpm. In contrast, conventional injection molding of TPU often employs a plasticizing speed of 100 rpm or higher. The TPU pellets are melted inside the barrel under the heating of the heating units, and are delivered by the screw along the barrel towards the injection nozzle downstream of the barrel. In an embodiment, the barrel may be divided into several sectors for heating, and thus there is a barrel temperature profile along the barrel. For example, the barrel may have 4-8 heating zones extending from the feeding inlet of the TPU pellets down to the injection space. The temperature of the heating zones may vary from each other between, for example, 160 to 240°C, or 180 to 220°C.

The supercritical fluid may be dosed from a gas dosing system located between the TPU feeding hopper and the injection nozzle. The supercritical fluid can be selected from nitrogen, carbon dioxide, or other inert fluid that can be suitably used. The gas dosing system may comprise a source of the fluid, one or more pumps, a controlling system to control the injection of the fluid and a metering device to control the flow rate and/or the dosing volume of the supercritical fluid. Such gas dosing system is commercially available, for example, from Trexel Inc. as type T150 SCF system. In an embodiment, the supercritical fluid may have a mass flow rate of 0.001 kg/h to 100 kg/h, in some cases 0.01 kg/h to 60 kg/h, and in some cases 0.1 kg/h to 10 kg/h.

The supercritical fluid is dosed into the barrel and mixed with the TPU melt to form a mixture. The mixing can be implemented thoroughly so that the mixture formed is a single-phase solution. The mixing ratio of the TPU melt and the supercritical fluid can be adjusted according to practical needs. In an embodiment, the supercritical fluid is dosed into the TPU melt in an amount of 0.3-1.5 wt%, preferably 0.5-1.2 wt%, more preferably 0.6-1 wt%, based on the weight of the TPU melt. During the mixing, the mixture is kept at the elevated temperature of the barrel via the heating units under elevated pressure. The mixture thus formed is delivered by the screw along the barrel toward the distal portion of the barrel, where the mixture is to be injected.

### Step b)

In step b), the mixture composed of the TPU melt and the supercritical fluid is injected through an injection nozzle from the barrel into a mold. The mixture is conveyed by the screw to the distal portion of the barrel, and accumulates in the distal portion downstream of the screw. This distal portion of the barrel is heated by a separate heating unit to an elevated temperature higher than the temperature of the previous sections of the barrel. For example, the temperature of the distal portion may be 220-360°C, or 240-280°C. The accumulation of the mixture creates elevated pressure in the distal portion. A tip vale may be set in front of the distal portion to maintain an elevated pressure to prevent the supercritical fluid from coming out of the mixture. During accumulation, the nozzle is closed via a shut-off nozzle valve to maintain sufficiently high pressure, so as to prevent premature nucleation, foaming or gas dissolution.

After a sufficient charge has been accumulated, the screw may cease to rotate. Then, the shut-off nozzle valve is opened, and the mixture of the TPU melt and the supercritical fluid is injected under elevated pressure through the nozzle into the cavity of the mold. The injection speed may be 3-25 mm/s, preferably 5-20 mm/s, more preferably 5-15 mm/s. The volume of the mixture to be injected into the mold can be 15%-80% of the volume of the cavity of the mold. Once the mixture is injected into the mold, the supercritical fluid will expand from the inside of the mixture upon depressurization since the mold is held under pressure lower than that in the barrel. Upon the expansion, the supercritical fluid vaporizes and comes out of the mixture or solution to nucleate a plurality of microcell sites. The nucleated sites grow into microcells and the foamed mixture gradually fills all the cavity of the mold. The mold is held under ambient temperature, or temperature of 20- 60°C, to cool the foamed mixture. Upon cooling, the foamed mixture is cured and foamed articles are thus obtained in the shape of the cavity of the mold.

### Step c)

Before or during the injection of the mixture, a counter pressure gas is dosed into the mold to build up a counter pressure inside the mold. The mold of the present invention is specially designed and constitutes an inventive aspect of the present invention. This mold can be made from, for example, steel, and is equipped with a counter pressure gas dosing system, through which system a counter pressure gas may be dosed into the mold in a controllable way. The counter pressure gas dosing system may comprise a source of the gas, one or more pumps, a controlling system to control the introduction of the gas and a metering device to control the flow rate and/or the dosing volume of the gas. A pressure sensor may be mounted to detect the counter pressure. The configuration of such gas dosing system can be similar to the system to inject the supercritical fluid as stated above. A schematic view of the mold equipped with such controllable counter pressure is shown in figure 2.

The mold has lots of venting holes distributed both on the mold surface and in the mold cavity edge. According to the invention, the density of the venting holes in the mold is 1-8 holes/cm³, preferably 2-5 holes/cm³, more preferably 2-3 holes/cm³ in average. The venting holes may have a diameter of 0.05-1 mm, preferably 0.1-0.5 mm, more preferably 0.1-0.3 mm. Before or during the injection and foaming, counter pressure gas, such as nitrogen, carbon dioxide, or air, may be dosed into the mold through these venting holes, and counter pressure is build up inside the mold. The counter pressure may be 5.5-9.5 bar, preferably 6.5-8.5 bar. The excess of the counter pressure gas will be vented or released through the venting holes swiftly during the injection molding. So, during the injection, TPU is not foamed due to the counter gas, and the gas is released quickly via many venting holes, and thus the TPU foams with all the cells growing simultaneously and uniformly.

The mold has three gate opens, i.e., the middle gate and the upper and lower gates. Upon the injection, all the three gates open, with the open delay time for the three gates to be: middle gate: 0-0.5s delay, upper and lower gates: 2-4 s delay. Preferably, the open delay times are: middle gate: 0.2-0.3 s delay, upper and lower gates: 2.5-3.5 s delay. The mold has a hot runner, with the temperature of 150-240°C. Before the foaming of the injected mixture, the mold is held under a controllable counter pressure via the counter gas dosing system, and the material is not substantially foamed.

### Step d)

After the injection is complete, the counter pressure air is released. Owing to the venting holes distributed vastly in the mold, the counter pressure air can be released swiftly. The supercritical fluid comes out of the mixture and nucleates cells to form voids inside the mixture. The presence of counter pressure prevents the expansion of the cells. Then, after gas releasing, the mixture foams simultaneously. The mold temperature is set as 20-60°C, or 30-45°C to cool the foam for a time period of, for examples, 200-500 s.

### Step e)

After the foaming is complete, the TPU foam thus formed is released from the mold. Owing to the use of the supercritical fluid and the counter pressure gas, the pressure of the mold is lower, and the releasing force of the foam from the mold is reduced, making the foam easier to be released from the mold. The foam may be stabilized for a time period of, for example, 2-48 hours.

The foam formed via the inventive process has a density as low as 0.3 g/cm³ or less, and even can be 0.2 g/cm³. In contrast, normally TPU foam has a density of higher than 0.45 g/cm³. It is believed that the introduction of the counter pressure gas upon the injection of the mixture reduces the pressure difference between the inside of the mixture and the cavity of the mold, so that the mixture injected would foam simultaneously and the supercritical fluid comes out of the mixture in a milder way, resulting in TPU foams with uniform cells. The voids formed in the foam have smaller and much more homogeneous size as compared with those obtained without counter pressure, and the diameter is in the range of less than 2 mm, or less than 1 mm, and can even be 0.5 mm. Owing to such smaller and much more homogeneous size of the voids in the foam, the foam has excellent rebound resilience and smaller deviation of the rebound resilience as compared with those produced via conventional microcellular foaming process. In contrast, TPU foam produced from conventional microcellular foaming process with normal mold has large void size of > 5 mm, which can be observed with bare eyes. Figure 2 shows the pictures of the foamed articles obtained by the inventive process and conventional microcellular foaming process.

In an example, the thermoplastic polyurethane foam obtainable or obtained by the process described above in the present invention has a low density of 0.3 g/cm³ or less, with voids homogeneously and uniformly distributed therein in a diameter of less than 2 mm.

The foams obtained via the process of the present invention, with the advantageous properties listed above, are thus suitable for many applications that require light weight and excellent rebound resilience. These applications include, but not limited to, sporting goods, shoe parts (such as shoe sole), toys, automotive parts, packing materials and leisure goods.

### Examples

The present invention will now be described with reference to Examples and Comparative Examples, which are not intended to limit the present invention.

The following materials were used:
Standard TPU compostion: TPUs were prepared from 62.6 parts of 4,4'-diphenylmethane diisocyanate, 100 parts of polyether polyol Polytetramethylene ether glycol (PTMEG) with molecular weight 1000 and 13.5 parts of chain extender 1,4-butanediol
Nitrogen (N₂) purity: 99.9995%, supplied by Air Liquid, amount range: 0.5%-1%

### Measurement Methods:

Density of the foam is tested according to DIN EN ISO 1183-1, A.

Rebound resilience is tested according to DIN 53512. The deviation of the rebound resilience is also counted. A deviation of less than 5% indicates good homogeneity, while a deviation of above 5% indicates inhomogeneity.

### Example 1:

TPU foam was made via microcellular foaming process with a new mold. The microcellular foaming process was implemented with an injection molding machine (Kraussmaffei, type KM110/380 CX) and a gas dosing system (Trexel, type T150 SCF system). The new mold was a specially designed mold with many venting holes distributed all over the mold, and the hole size is 0.1-0.3mm (diameter) and density is 2 hole/cm³ in average. The mold was equipped with counter pressure gas dosing system, which enabled dosing and releasing gas via venting holes on the mold. There were three gates (upper, middle, lower gate) with hot runners on this mold, and all the gates could be controlled with open sequence and open delay.

During the foaming process, TPU pellets were pre-dried in the vacuum oven under 100°C for 3 hours, and then were dosed into the injection machine hopper with N₂ gas continuously dosed to the hopper to prevent further water absorption by TPU pellets. In the foaming process, the barrel temperature profile on the injection machine was set as 180°C, 195°C, 200°C, 205°C, 205°C, 205°C, 205°C, with plasticizing length set as 50mm, plasticizing speed set as 15 rpm. Then N₂ was dosed into the barrel via SCF dosing system during plasticizing, with a gas content set as 0.8 wt% of the melt weight (62g). After plasticizing, TPU/gas mixture was injected into the mold, and the injection speed was set as 7mm/s with no packing time. Upon the injection, all the three gates opened, with the open delay time for the three gates being 0.2s for middle gate and 3s for upper and lower gate upon injection. The hot runner temperature was set as 178°C. Meanwhile, air as counter pressure gas was introduced into the mold also upon the melt injection, and the gas pressure was set and maintained in the range of 7.5-8.5bar. After injection was complete, the counter pressure air was released. The mold temperature was set at 40°C with a cooling time of 350s. After foaming, the sample was stabilized for 24h under room temperature for further testing.

### Example 2:

The machine set up was the same as Example 1, and the same new mold was used. During the foaming process, TPU pellets were pre-dried in the vacuum oven under 100°C for 3 hours, and then were dosed into the injection machine hopper with N₂ gas continuously dosed to the hopper to prevent further water absorption by TPU pellets. In the foaming process, the barrel temperature profile on the injection machine was set as 180°C, 195°C, 200°C, 205°C, 205°C, 205°C, 205°C with plasticizing length set as 52mm, plasticizing speed set as 20 rpm. Then N₂ was dosed into the barrel via SCF dosing system during plasticizing, with a gas content set as 0.6 wt% of the melt weight (65g). After plasticizing, TPU/gas mixture was injected to the mold, and the injection speed was set as 7mm/s with no packing time. Upon the injection, all the three gates opened, with the open delay time for the three gates being 0.2s for middle gate and 3s for upper and lower gate upon injection. The hot runner temperature was set as 178°C. Meanwhile, air as counter pressure gas was introduced into the mold also upon the melt injection, and the gas pressure was set and maintained in the range of 7.5-8.5 bar. After injection was complete, the counter pressure air was released. The mold temperature was set at 40°C with a cooling time of 350s. After foaming, the sample was stabilized for 24h under room temperature for further testing.

### Examples 3-12:

In examples 3-12, the machine set up were the same as Example 1, and the same new mold was used. The processes to produce TPU foam samples followed the procedures of example 1, except that the process parameters were set as shown in table 1. After foaming, the samples were stabilized for 24h under room temperature for further testing.

### Comparative example 1:

The machine set up was the same as Example 1, except that an old mold was used.

The old mold was also a test plate mold. It only had 3 big venting opens (8mm in diameter) on the thickness edges connected to atmosphere, and no counter pressure gas dosing system was equipped. The mold had cold runner with three open gates.

During the foaming process, TPU pellets were pre-dried in the vacuum oven under 100°C for 3 hours. Then TPU pellets were dosed into the injection machine hopper with N₂ gas continuously dosed to the hopper to prevent further water absorption by TPU pellets. In the foaming process, the barrel temperature profile on the injection machine was set as 180°C, 195°C, 200°C, 205°C, 205°C, 205°C, 205°C, with plasticizing length set as 92mm, plasticizing speed set as 15 rpm. Then N₂ was dosed into the barrel via SCF dosing system during plasticizing, with a gas content set as 0.8 wt% of the melt weight (117g). After plasticizing, TPU/gas mixture was injected to the mold. The injection speed was set as 7mm/s with 1 s packing time. Upon the injection, all the three gates opened in the same time. The mold temperature was set at 40°C with a cooling time of 350s. After foaming, the sample was stabilized for 24h under room temperature for further testing.

### Comparative example 2:

The machine set up was the same as Comparative example 1 with the same old mold. During the foaming process, TPU pellets were pre-dried in the vacuum oven under 100°C for 3 hours. Then TPU pellets were dosed into the injection machine hopper with N₂ gas continuously dosed to the hopper to prevent further water absorption by TPU pellets. In the foaming process, the barrel temperature profile on the injection machine was set as 180°C, 195°C, 200°C, 205°C, 205°C, 205°C, 205°C, with plasticizing length set as 92 mm, plasticizing speed set as 20 rpm. Then N₂ was dosed into the barrel via SCF dosing system during plasticizing, with a gas content set as 0.6 wt% of the melt weight (117g). After plasticizing, TPU/gas mixture was injected into the mold. The injection speed was set as 100mm/s with 1 s packing time. Upon the injection, all the three gates opened in the same time. The mold temperature was set at 40°C with a cooling time of 350s. After foaming, the sample was stabilized for 24h under room temperature for further testing.

The properties of the samples produced from examples 1-12 and comparative examples 1-2 were tested and the results were summarized in the following table 1.

**Table 1: Properties of the samples according to the inventive examples 1-12 and comparative examples 1-2**

| Example | Compar ative Exampl e 1 | Compar ative Exampl e 2 | Exampl e 1 | Exampl e 2 | Exampl e 3 | Exampl e 4 | Exampl e 5 |
|---|---|---|---|---|---|---|---|
| Mold | old | old | new | new | new | new | new |
| Counter gas pressure (bar) | - | - | 7.5-8.5 | 7.5-8.5 | 5.5-6.5 | 8.5-9.5 | 7.5-8.5 |
| Injection speed (mm/s) | 7 | 100 | 7 | 7 | 7 | 7 | 5 |
| N₂ gas dosage (%) | 0.80 | 0.60 | 0.80 | 0.60 | 0.80 | 0.80 | 0.80 |
| Plasticizing speed (rpm) | 15 | 20 | 15 | 20 | 15 | 15 | 15 |

| Properties | | | | | | | |
|---|---|---|---|---|---|---|---|
| Density (g/cm³) | 0.45 | 0.45 | 0.21 | 0.25 | 0.24 | 0.24 | 0.24 |
| Big void size (mm) - defect points | >7 | >5 | <1 | <0.5 | <0.7 | <0.7 | <0.7 |
| Rebound resilience Ava (%) | 42 | 46 | 65 | 58 | 56 | 55 | 56 |
| Rebound resilience deviation (%)-reflect homogeneity | ±7 | ±6 | ±3 | ±1 | ±2 | ±2 | ±2 |

| Example | Example 6 | Example 7 | Example 8 | Exampl e 9 | Example 10 | Example 11 | Example 12 |
|---|---|---|---|---|---|---|---|
| Mold | new | new | new | new | new | new | new |
| Counter gas pressure (bar) | 7.5-8.5 | 7.5-8.5 | 7.5-8.5 | 7.5-8.5 | 7.5-8.5 | 7.5-8.5 | 7.5-8.5 |
| Injection speed (mm/s) | 15 | 25 | 7 | 7 | 7 | 7 | 7 |
| N₂ gas dosage (%) | 0.80 | 0.80 | 0.50 | 1.00 | 1.50 | 0.80 | 0.80 |
| Plasticizing speed (rpm) | 15 | 15 | 15 | 15 | 15 | 10 | 30 |

| Properties | | | | | | | |
|---|---|---|---|---|---|---|---|
| Density (g/cm³) | 0.24 | 0.24 | 0.24 | 0.24 | 0.24 | 0.24 | 0.24 |
| Big void size (mm) defect points | <0.7 | <0.7 | <0.7 | <1 | <2 | <0.7 | <1 |
| Rebound resilience Ava (%) | 56 | 55 | 55 | 57 | 54 | 56 | 54 |
| Rebound resilience deviation (%)-reflect homogeneity | ±2 | ±3 | ±2 | ±2 | ±4 | ±2 | ±3 |

The samples produced in the inventive examples with new mold equipped with controllable counter pressure and venting holes, all exhibit low density of less than 0.3 g/cm³, and big void size of less than 2 mm, and even less than 0.7 mm or 0.5 mm. As a result, the rebound resilience and homogeneity of these samples are excellent. In contrast, the samples from the comparative examples 1-2, produced by processes with old mold without counter pressure and venting holes, had high density of 0.45 g/cm³ and big void size of above 5 or 7 mm. Consequently, the rebound resilience and homogeneity of these samples are inferior, making them less suitable for use in applications such as shoe sole or leisure goods.

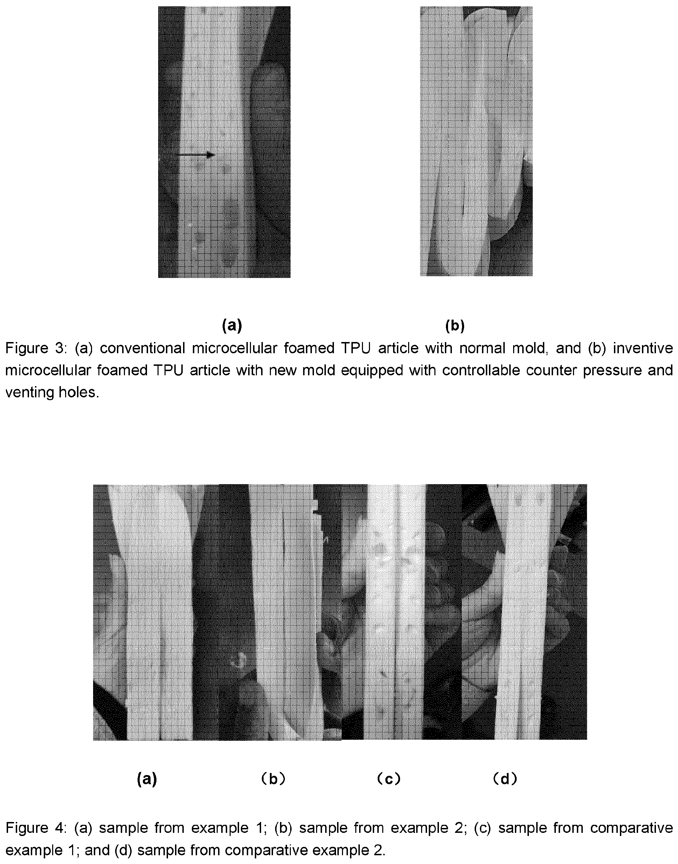

The above effect is also clear from figure 3. Figure 3 shows the pictures of the foam samples obtained from examples 1-2 and comparative examples 1-2. One can easily see the differences between these samples with bare eyes. The samples from inventive examples 1-2 have much smaller voids and much more homogeneous foam morphology, while the samples from comparative examples 1-2 have much bigger voids and obviously inhomogeneous foam morphology.

In addition, as to the comparative examples using old mold, comparative example 7 with extremely high injection speed of 100 mm/s produces result better than that of comparative example 6, which employs an injection speed of 7 mm/s. Normally, for the preparation of low density thermoplastic polyurethane foam, low injection speed is preferred. In contrast, with the new mold, lower density foam was achieved with low injection speed.

### Examples 13-15

In examples 13-15, the machine set up were the same as Example 2, and the same new mold was used. The processes to produce TPU foam samples followed the procedures of example 2, except that the TPUs used in examples 13-15 were prepared by further addition of different amounts of silicone oil on the basis of the standard TPU composition as mentioned above. The specific silicone oil used in these examples was Momentive Niax Silicone L-6863. After foaming, all the samples were stabilized for 24h under room temperature for further testing.

The properties of the samples produced from examples 13-15 were tested and the results, together with the result of example 2, were summarized in the following table 2.

**Table 2: Properties of the samples according to examples 13-15 and example 2**

| Example | Example 2 | Example 13 | Example 14 | Example 15 |
|---|---|---|---|---|
| L6863 content | 0% | 0.5 % | 3% | 6% |
| Mold | new | new | new | new |
| Counter gas pressure (bar) | 7.5-8.5 | 7.5-8.5 | 7.5-8.5 | 7.5-8.5 |
| Injection speed (mm/s) | 7 | 7 | 7 | 7 |
| N₂ gas dosage (%) | 0.60 | 0.60 | 0.60 | 0.60 |
| Plasticizing speed (rpm) | 20 | 20 | 20 | 20 |

| Properties | | | | |
|---|---|---|---|---|
| Density (g/cm³) | 0.25 | 0.24 | 0.20 | 0.23 |
| Big void size (mm) defect points | <0.5 | <1 | <0.5 | <1 |
| Rebound resilience Ava (%) | 58 | 57 | 60 | 56 |
| Rebound resilience deviation (%)-reflect homogeneity | ±1 | ±1 | ±1 | ±2 |

It can be seen from the above table that the addition of the silicone oil in preparing TPUs has substantial effect on the properties of the TPU foams obtained, especially in terms of foam density and cell homogeneity. The addition of certain amounts of silicone oil results in reduced density of the TPU foam in all of examples 13-15. However, the addition of 0.5% of L6863 into the TPU composition merely results in slight improvement of the foam density and cell homogeneity, while increasing the L6863 content to 3% results in a much lower density of up to ~0.2g/cm³ with similar cell homogeneity as standard TPU foam (example 2). Further increasing the content of L6863 to 6% has adverse effects on the improvement of density and cell homogeneity. Thus, by adjusting the content of silicone oil within particular range, further improvement in terms of foam density and/or cell homogeneity can be achieved on the basis of the inventive process implemented in the present invention.

The structures, materials, compositions, and methods described herein are intended to be representative examples of the invention, and it will be understood that the scope of the invention is not limited by the scope of the examples. Those skilled in the art will recognize that the invention may be practiced with variations on the disclosed structures, materials, compositions and methods, and such variations are regarded as within the ambit of the invention. Thus, it is intended that the present invention cover such modifications and variations as come within the scope of the appended claims.

## Claims

1. A process to produce thermoplastic polyurethane foam via microcellular foaming process, which comprises:
a) dosing a supercritical fluid into the thermoplastic polyurethane melt to form a mixture;
b) injecting the mixture into a mold and foaming the mixture;
c) before or during the injection of the mixture, introducing a counter pressure gas into the mold;
d) releasing the counter pressure gas after the injection; and
e) releasing the thermoplastic polyurethane foam from the mold,
wherein the mold has venting holes distributed all over the mold,
**characterized in that** the venting holes in the mold have a diameter in the range of 0.05-1 mm and the density of the venting holes in the mold is 1-8 holes/cm³ on average.

2. The process according to claim 1, wherein the supercritical fluid is selected from nitrogen, carbon dioxide or the mixture thereof.

3. The process according to claim 1 or 2, wherein the supercritical fluid is dosed into the TPU melt in an amount of 0.3-1.5 wt%, preferably 0.5-1.2 wt%, more preferably 0.6-1 wt%, based on the weight of the TPU melt.

4. The process according to any one of claims 1 to 3, wherein the counter pressure gas is introduced to build up a counter pressure of 5-10 bar inside the mold, preferably 5.5-9.5 bar, more preferably 6.5-8.5 bar.

5. The process according to any one of claims 1 to 4, wherein the mold has three gate opens, middle gate, upper gate and lower gate and the upper and lower gates have a gate open delay time of 2-4 s delay, and the middle gate has a gate open delay time of 0-0.5 s delay.

6. The process according to any one of claims 1 to 5, wherein TPU is heated by heating units in the container, and the heating temperature is 160-320°C, preferably 180-280°C, more preferably 200-240°C.

7. The process according to any one of claims 1 to 6, wherein the TPU is plasticized in a plasticizing speed of 10-50 rpm, preferably 10-30 rpm, more preferably 10-20 rpm.

8. The process according to any one of claims 1 to 7, wherein the mixture is injected into the mold in an injection speed of 3-25 mm/s, preferably 5-20 mm/s, more preferably 5-15 mm/s.

9. The process according to any one of claims 1 to 8, wherein the TPU foam has a density of 0.3 g/cm³ or less, preferably 0.25 g/cm³ or less.

10. The process according to any one of claims 1 to 9, wherein the TPU foam has voids with a diameter less than 2 mm, preferably less than 1 mm, more preferably less than 0.5 mm.

11. The process according to any one of claims 1 to 9, wherein the thermoplastic polyurethane is prepared by adding 0.1-6 wt% of silicone oil, preferably 0.5-5 wt%, more preferably 1.5-3.5 wt%, based on the weight of the TPU.

## Patentansprüche

1. Verfahren zur Herstellung eines thermoplastischen Polyurethan-Schaumstoffs mittels eines mikrozellulären Schäumverfahrens, das Folgendes umfasst:
a) das Dosieren eines überkritischen Fluids in die thermoplastische Polyurethanschmelze, um eine Mischung zu bilden;
b) das Einspritzen der Mischung in ein Formwerkzeug und das Schäumen der Mischung;
c) vor oder während des Einspritzens der Mischung das Einführen eines Gegendruckgases in das Formwerkzeug;
d) das Ablassen des Gegendruckgases nach dem Einspritzen und
e) das Entfernen des thermoplastischen Polyurethan-Schaumstoffs aus dem Formwerkzeug,
wobei das Formwerkzeug Entgasungsöffnungen aufweist, die über das gesamte Formwerkzeug verteilt sind,
**dadurch gekennzeichnet, dass** die Entgasungsöffnungen im Formwerkzeug einen Durchmesser in dem Bereich von 0,05 - 1 mm aufweisen und die Dichte der Entgasungsöffnungen in dem Formwerkzeug durchschnittlich 1 - 8 Löcher/cm³ beträgt.

2. Verfahren nach Anspruch 1, wobei das überkritische Fluid aus Stickstoff, Kohlendioxid oder einer Mischung davon ausgewählt ist.

3. Verfahren nach Anspruch 1 oder 2, wobei das überkritische Fluid mit einer Menge von 0,3 - 1,5 Gew.-%, vorzugsweise 0,5 - 1,2 Gew.-%, stärker bevorzugt 0,6 - 1 Gew.-%, bezogen auf das Gewicht der TPU-Schmelze, in die TPU-Schmelze dosiert wird.

4. Verfahren nach einem der Ansprüche 1 bis 3, wobei das Gegendruckgas so eingeführt wird, dass innerhalb des Formwerkzeugs ein Gegendruck von 5 - 10 bar, vorzugsweise 5,5 - 9,5 bar, stärker bevorzugt 6,5 - 8,5 bar, aufgebaut wird.

5. Verfahren nach einem der Ansprüche 1 bis 4, wobei das Formwerkzeug drei sich öffnende Angüsse, einen mittleren Anguss, einen oberen Anguss und einen unteren Anguss, aufweist und der obere und der untere Anguss eine Angussöffnungsverzögerungsdauer von 2 - 4 s aufweisen und der mittlere Anguss eine Angussöffnungsverzögerungsdauer von 0 - 0,5 s Verzögerung aufweist.

6. Verfahren nach einem der Ansprüche 1 bis 5, wobei TPU von Heizvorrichtungen im Behälter erhitzt wird und die Heiztemperatur 160 - 320 °C, vorzugsweise 180 - 280 °C, stärker bevorzugt 200 - 240 °C, beträgt.

7. Verfahren nach einem der Ansprüche 1 bis 6, wobei das TPU mit einer Plastifiziergeschwindigkeit von 10 - 50 U./min, vorzugsweise 10 - 30 U./min, stärker bevorzugt 10 - 20 U./min, weichgestellt wird.

8. Verfahren nach einem der Ansprüche 1 bis 7, wobei die Mischung mit einer Einspritzgeschwindigkeit von 3 - 25 mm/s, vorzugsweise 5 - 20 mm/s, stärker bevorzugt 5 - 15 mm/s, in das Formwerkzeug eingespritzt wird.

9. Verfahren nach einem der Ansprüche 1 bis 8, wobei der TPU-Schaumstoff eine Dichte von 0,3 g/cm³ oder weniger, vorzugsweise 0,25 g/cm³ oder weniger, aufweist.

10. Verfahren nach einem der Ansprüche 1 bis 9, wobei der TPU-Schaumstoff Hohlräume mit einem Durchmesser von weniger als 2 mm, vorzugsweise weniger als 1 mm, stärker bevorzugt weniger als 0,5 mm, aufweist.

11. Verfahren nach einem der Ansprüche 1 bis 9, wobei das thermoplastische Polyurethan hergestellt wird, indem 0,1 - 6 Gew.-% Siliconöl, vorzugsweise 0,5 - 5 Gew.-%, stärker bevorzugt 1,5 - 3,5 Gew.-%, bezogen auf das Gewicht des TPU, zugegeben werden.

## Revendications

1. Procédé pour produire de la mousse de polyuréthane thermoplastique par le biais d'un procédé de moussage microcellulaire, lequel comprend :
a) l'ajout dosé d'un fluide supercritique à la masse fondue de polyuréthane thermoplastique pour former un mélange ;
b) l'injection du mélange dans un moule et le moussage du mélange ;
c) avant ou pendant l'injection du mélange, l'introduction d'un gaz de contre-pression dans le moule ;
d) le dégagement du gaz de contre-pression après l'injection ; et
e) le démoulage de la mousse de polyuréthane thermoplastique,
dans lequel le moule a des trous d'évent répartis sur tout le moule,
**caractérisé en ce que** les trous d'évent présents dans le moule ont un diamètre dans la plage de 0,05 à 1 mm et la densité des trous d'évent présents dans le moule est de 1 à 8 trous/cm³ en moyenne.

2. Procédé selon la revendication 1, dans lequel le fluide supercritique est choisi parmi l'azote, le dioxyde de carbone ou le mélange de ceux-ci.

3. Procédé selon la revendication 1 ou 2, dans lequel le fluide supercritique est ajouté de façon dosée à la masse fondue de TPU en une quantité de 0,3 à 1,5 % en poids, de préférence de 0,5 à 1,2 % en poids, plus préférablement de 0,6 à 1 % en poids, par rapport au poids de la masse fondue de TPU.

4. Procédé selon l'une quelconque des revendications 1 à 3, dans lequel le gaz de contre-pression est introduit pour créer une contre-pression de 5 à 10 bar à l'intérieur du moule, de préférence de 5,5 à 9,5 bar, plus préférablement de 6,5 à 8,5 bar.

5. Procédé selon l'une quelconque des revendications 1 à 4, dans lequel le moule a trois ouvertures de porte, une porte au milieu, une porte supérieure et une porte inférieure, et les portes supérieure et inférieure ont un temps de retard d'ouverture de la porte de 2 à 4 s de retard et la porte au milieu a un temps de retard d'ouverture de la porte de 0 à 0,5 s de retard.

6. Procédé selon l'une quelconque des revendications 1 à 5, dans lequel le TPU est chauffé par des unités de chauffage dans le récipient et la température de chauffage est de 160 à 320 °C, de préférence de 180 à 280 °C, plus préférablement de 200 à 240 °C.

7. Procédé selon l'une quelconque des revendications 1 à 6, dans lequel le TPU est plastifié à une vitesse de plastification de 10 à 50 tr/min, de préférence de 10 à 30 tr/min, plus préférablement de 10 à 20 tr/min.

8. Procédé selon l'une quelconque des revendications 1 à 7, dans lequel le mélange est injecté dans le moule à une vitesse d'injection de 3 à 25 mm/s, de préférence de 5 à 20 mm/s, plus préférablement de 5 à 15 mm/s.

9. Procédé selon l'une quelconque des revendications 1 à 8, dans lequel la mousse de TPU a une masse volumique inférieure ou égale à 0,3 g/cm³, de préférence inférieure ou égale à 0,25 g/cm³.

10. Procédé selon l'une quelconque des revendications 1 à 9, dans lequel la mousse de TPU a des pores ayant un diamètre inférieur à 2 mm, de préférence inférieur à 1 mm, plus préférablement inférieur à 0,5 mm.

11. Procédé selon l'une quelconque des revendications 1 à 9, dans lequel le polyuréthane thermoplastique est préparé par l'ajout de 0,1 à 6 % en poids d'huile de silicone, de préférence 0,5 à 5 % en poids, plus préférablement 1,5 à 3,5 % en poids, par rapport au poids du TPU.
